# EUROPÄISCHE PATENTSCHRIFT

(11) **EP 2 935 877 B1**
(45) Veröffentlichungstag und Bekanntmachung des Hinweises auf die Patenterteilung: **28.03.2018**
(21) Anmeldenummer: 13815448.9
(22) Anmeldetag: 16.12.2013
(51) Int. Cl.: F03D 7/02

(54) **WINDENERGIEANLAGE UND VERFAHREN ZUM REGELN DES ELEKTRISCHEN MOMENTS EINER WINDENERGIEANLAGE BEI EINEM NETZFEHLER**
WIND TURBINE AND METHOD FOR REGULATING THE ELECTRICAL MOMENT OF A WIND TURBINE IN THE EVENT OF A GRID FAULT
EOLIENNE ET PROCÉDÉ DESTINÉ À RÉGLER LE MOMENT ÉLECTRIQUE D'UNE ÉOLIENNE EN CAS DE DYSFONCTIONNEMENT DU RÉSEAU

(30) Priorität: 20.12.2012 DE 102012224067
(43) Veröffentlichungstag der Anmeldung: 28.10.2015
(73) Patentinhaber: Senvion GmbH, 22297 Hamburg (DE)
(72) Erfinder: GEISLER, Jens, 24768 Rendsburg (DE); SCHRADER, Stefan, 24106 Kiel (DE); FORTMANN, Jens, 13156 Berlin (DE)
(74) Vertreter: Glawe, Delfs, Moll
(86) Internationale Anmeldenummer: PCT/EP2013/076687
(87) Internationale Veröffentlichungsnummer: WO 2014/095710

(56) Entgegenhaltungen:
- EP-A1- 2 628 947
- DE-A1-102007 060 958

## Beschreibung

Die Erfindung betrifft eine Windenergieanlage sowie ein Verfahren zum Regeln des elektrischen Moments einer Windenergieanlage bei einem Netzfehler.

Bei einem Netzfehler, der mit einem Spannungsabfall verbunden ist, kann die Windenergieanlage nur weniger elektrische Leistung an das Netz abgeben als im Normalbetrieb. Erst mit der Wiederkehr der Spannung ist die Aufnahmefähigkeit des Netzes wieder gegeben. Gemäß den Anforderungen der Netzbetreiber sollen die Windenergieanlagen nach der Spannungswiederkehr innerhalb kurzer Zeit wieder die volle Leistung einspeisen. Allerdings sind abrupte Wechsel in der elektrischen Last mit hohen mechanischen Belastungen für die Windenergieanlage verbunden.

Für den Betrieb der Windenergieanlage bei einem Netzfehler muss deswegen ein Kompromiss gefunden werden, der einerseits den Anforderungen der Netzbetreiber genügt und andererseits die Belastung für die Windenergieanlage in vertretbaren Grenzen hält. Aus der DE 10 2007 060 958 ist ein Verfahren bekannt, bei dem der Regler, der das elektrische Moment in Abhängigkeit von der Drehzahl regelt, nach einem Netzfehler auf einen vorgegebenen Wert initialisiert wird. Der Regler kann die Windenergieanlage dann von einem definierten Ausgangspunkt aus sanft zum Normalbetrieb zurückführen. Da die Windenergieanlage sich bei diesem Verfahren nach dem Netzfehler wieder im freien Regelbetrieb befindet, hängt es stark von den äußeren Bedingungen ab, wie lange die Rückkehr zum Normalbetrieb dauert. Angesichts strenger werdender Vorschriften der Netzbetreiber dauert es mitunter zu lange, bis die Windenergieanlage wieder volle Leistung einspeist.

Der Erfindung liegt ausgehend vom genannten Stand der Technik die Aufgabe zu Grunde, eine Windenergieanlage und ein Verfahren zum Regeln des Drehmoments der Windenergieanlage vorzustellen, mit denen einerseits die Windenergieanlage nach dem Netzfehler schnell zur vollen Energieeinspeisung zurückkehrt und andererseits die Belastungen für die Windenergieanlage in Grenzen gehalten werden. Die Aufgabe wird gelöst mit den Merkmalen der unabhängigen Ansprüche. Vorteilhafte Ausführungsformen finden sich in den Unteransprüchen.

Bei dem erfindungsgemäßen Verfahren wird ein Spannungsabfall entdeckt, der außerhalb der Grenzen des Normalbetriebs liegt. Es wird ein Momentenregler betrieben, der einen Zielwert für das elektrische Moment der Windenergieanlage ermittelt. Eine Momentenrampe wird initialisiert und der Zielwert des Momentenreglers mit der Momentenrampe verglichen. Als Momenten-Sollwert wird der kleinere der beiden Werte ausgewählt und das elektrische Moment der Windenergieanlage auf der Basis des Momenten-Sollwerts eingestellt.

Zunächst werden einige Begriffe erläutert. Als Momentenrampe wird ein auf das elektrische Moment der Windenergieanlage bezogener zeitlich veränderlicher Vergleichswert bezeichnet, der beginnend mit einem Anfangswert ansteigt. Mit dem Initialisieren wird die Momentenrampe auf den Anfangswert gesetzt und die zeitliche Veränderung in Gang gesetzt.

Wenn das elektrische Moment der Windenergieanlage "auf Basis" eines Momenten-Sollwerts eingestellt wird, ist es möglich, jedoch nicht zwingend, dass der tatsächliche Vorgabewert für das elektrische Moment der Windenergieanlage unmittelbar dem erfindungsgemäß ermittelten Momenten-Sollwert entspricht. In vielen Fällen wird der mit dem erfindungsgemäßen Verfahren ermittelte Momenten-Sollwert noch mit weiteren Größen kombiniert, um den Vorgabewert zu ermitteln, auf den das elektrische Moment am Ende tatsächlich eingestellt wird.

Der Momentenregler kann den Zielwert in Abhängigkeit der Differenz zwischen einer Soll-Drehzahl und einer Ist-Drehzahl der Windenergieanlage ermitteln. Anstatt direkt die Drehzahlwerte zu verarbeiten, kann der Momentenregler auch von drehzahläquivalenten Größen abhängen, also von Größen, die einen Rückschluss auf die Drehzahl erlauben.

Durch die Erfindung wird die Möglichkeit eröffnet, nach dem Netzfehler einen Regler zu verwenden, der die Windenergieanlage innerhalb sehr kurzer Zeit zur vollen Leistungseinspeisung zurückführt. Die steigenden Anforderungen der Netzbetreiber im Hinblick auf die Wiederkehr der Leistungseinspeisung können also erfüllt werden. Dem Problem, dass solche schnellen Regler den Vorgabewert gelegentlich so schlagartig ändern, dass die Windenergieanlage bzw. Teile von der Windenergieanlage, genauer gesagt der mechanische Triebstrang der Windenergieanlage in Schwingung versetzt wird, wird dadurch begegnet, dass nach oben hin eine Begrenzung durch die Momentenrampe eingezogen wird. Schlagartige Änderungen nach oben hin (also in Richtung einer Erhöhung des elektrischen Moments) sind durch die Momentenrampe also ausgeschlossen. Dagegen wird dem Regler nach unten hin die erforderliche Bewegungsfreiheit gelassen. Der Momentenregler ist also frei darin, das elektrische Moment zu reduzieren, falls der Wind in der Zwischenzeit nachgelassen hat. Mit der Erfindung wird also eine Regelungsstrategie vorgeschlagen, die die verschiedenen und zum Teil widerstreitenden Anforderungen nach einem Netzfehler in einen vorteilhaften Ausgleich miteinander bringt.

Die Momentenrampe ist vorzugsweise so gestaltet, dass sie mit einer konstanten Steigung von einem Anfangswert zu einem Endwert ansteigt. Die Steigung kann beispielsweise so bemessen sein, dass die Zeitdauer zwischen dem Anfangswert und dem Endwert 0,1 s bis 1 s, vorzugsweise 0,2 s bis 0,5 s beträgt. Der Anfangswert kann in einem bestimmten Verhältnis zu der kleinsten, während des Fehlers anliegenden Spannung stehen. Beispielsweise kann der Anfangswert zwischen 0 % und 80 % bezogen auf das vor dem Fehler anliegende elektrische Moment betragen. Der Endwert kann beispielsweise zwischen 80 % des vor dem Fehler anliegenden elektrischen Moments und dem maximal für die betreffende Windenergieanlage vorgesehenen elektrischen Moment liegen. Der Endwert ist typischerweise das Nennmoment (100%) der Anlage, so dass sich die Anlage nach dem Ende der Rampe wieder im normalen (unbeschränkten) Betrieb befindet. Sobald der Endwert erreicht ist, kann die Momentenrampe in eine Horizontale übergehen, die dem Endwert entspricht. Auch möglich ist es, dass die Windenergieanlage nach dem Erreichen des Endwerts wieder in den Normalbetrieb übergeht.

In einer vorteilhaften Ausführungsform wird der Anfangswert der Momentenrampe in Abhängigkeit von dem Verlauf des Netzfehlers ermittelt. Die Momentenrampe kann dadurch an die Gegebenheiten während des konkreten Netzfehlers angepasst werden. Beispielsweise kann der Anfangswert in Abhängigkeit von dem Minimalwert des elektrischen Moments eingestellt werden, das während des Netzfehlers anlag. Dieser Minimalwert kann direkt als Anfangswert übernommen werden. Ferner kann der Anfangswert in Abhängigkeit von der Dauer des Fehlers eingestellt werden.

Zusätzlich oder alternativ dazu kann die Steigung der Momentenrampe in Abhängigkeit von dem Verlauf des Netzfehlers ermittelt werden. Auch die Steigung der Momentenrampe kann in Abhängigkeit von der Dauer des Fehlers und/oder in Abhängigkeit von dem Minimalwert des elektrischen Moments eingestellt werden, das während des Netzfehlers anlag.

In dem Momentenregler wird eine Differenz zwischen einer Soll-Drehzahl und einer Ist-Drehzahl als Eingangsgröße verarbeitet. Die Ausgangsgröße des Momentenreglers bildet eine Zielgröße für das elektrische Moment der Windenergieanlage. Da es sich um einen schnellen Regler handelt, kann sich die Zielgröße bei entsprechenden Eingangsgrößen schlagartig ändern, so dass das Risiko von Schwingungen besteht, falls die Zielgröße direkt als Vorgabe an einen Umrichter übergeben würde. Indem der Zielwert mit der Momentenrampe verglichen wird und der kleinere der beiden Werte als Momenten-Sollwert ausgewählt wird, ist der Momentenregler nach oben hin durch die Momentenrampe begrenzt.

Bei dem Momentenregler kann es sich um einen Regler mit ansteigender Sprungantwort handeln, was bedeutet, dass die Ausgangsgröße mit der Zeit ansteigt, wenn die Eingangsgröße konstant bleibt. Wie der Momentenregler konkret verwirklicht wird, ist für die Erfindung nicht von Bedeutung. Vorzugsweise umfasst der Momentenregler einen klassischen I-Anteil, der die Eingangsgröße linear aufintegriert.

Es ist nicht ausgeschlossen, dass der Momentenregler zusätzlich noch einen P-Anteil aufweist, also einen Anteil der Ausgangsgröße, der proportional zur Eingangsgröße ist. In einer vorteilhaften Ausführungsform ist der Momentenregler jedoch ein reiner I-Regler ohne weitere Anteile. Gerade der I-Anteil kann nämlich nach dem Netzfehler besonders starke Ausschläge verursachen, indem eine große Abweichung zwischen Ist-Drehzahl und Soll-Drehzahl für einen Zeitraum aufsummiert wird. Als besonders vorteilhaft hat es sich deswegen herausgestellt, wenn die Momentenrampe gerade auf einen I-Anteil des Reglers bezogen ist.

Auch eine auf einen P-Anteil des Reglers bezogene Momentenrampe kann Gegenstand des erfindungsgemäßen Verfahrens sein. Umfasst der Regler sowohl einen I-Anteil als auch einen P-Anteil, so kann für den I-Anteil eine erste Momentenrampe und für den P-Anteil eine zweite Momentenrampe vorgesehen sein.

Da während des Netzfehlers unkontrollierbare Bedingungen vorherrschen, ist es zweckmäßig, die Ausgangsgröße des Momentenreglers zu initialisieren. Der Zielwert, der die Ausgangsgröße des Momentenreglers ist, kann beispielsweise auf null gesetzt werden oder auf das niedrigste elektrische Moment, das während des Netzfehlers noch angelegt werden konnte. Allerdings vergeht dann eine gewisse Zeit, bis der I-Anteil genügend aufintegriert ist, um wirksam zu werden. Vorzugsweise wird der Zielwert deswegen auf einen Wert initialisiert, der größer ist als dieses niedrigste elektrische Moment. In einer vorteilhaften Ausführungsform wird der Zielwert auf den Wert initialisiert, der vor Eintritt des Fehlers anlag, der Wert vor Fehlereintritt wird also quasi eingefroren. Die Initialisierung kann zu dem Zeitpunkt stattfinden, zu dem der Fehler eintritt.

In einer bevorzugten Gestaltung wird die Initialisierung des Zielwerts in Abhängigkeit von der Differenz zwischen Soll-Drehzahl und Ist-Drehzahl vor dem Netzfehler vorgenommen. Dies hat den Vorteil, dass der Verlauf vor dem Netzfehler noch Berücksichtigung findet. In aller Regel wird der Verlauf vor dem Netzfehler so sein, dass die Spannung ausgehend von 100 % an die untere Grenze des Normalbetriebs (beispielsweise 80 %) abgesunken ist. Entsprechend weniger elektrische Energie konnte an das Netz abgegeben werden, so dass das elektrische Moment entsprechend reduziert werden musste. Dies hat eine Erhöhung der Drehzahl zur Folge, die der Momentenregler aufintegriert, da es eben nicht möglich ist, der Beschleunigung durch ein erhöhtes elektrisches Moment entgegenzuwirken. Wird der Beginn des Netzfehlers als derjenige Zeitpunkt definiert, zu dem die Spannung die untere Grenze des Normalbetriebs unterschreitet, kann der Momentenregler beispielsweise auf den Zielwert initialisiert werden, der zu diesem Zeitpunkt anlag.

Da während des Netzfehlers keine zuverlässige Steuerung der Windenergieanlage möglich ist, kann der Betrieb des Momentenreglers während des Netzfehlers unterbrochen werden. Der Zielwert wird dann nicht mehr wie im normalen Betrieb anhand einer Abweichung zwischen Istwert und Sollwert der Regelgröße ermittelt, sondern auf andere Weise. Beispielsweise kann der Zielwert auf den Wert eingefroren werden, der vor Eintritt des Netzfehlers anlag, oder der Zielwert wird zu einem geeigneten Zeitpunkt initialisiert, d.h. auf einen anderweitig ermittelten Zielwert festgesetzt. Nach dem Aktivieren ist der Momentenregler im normalen Betrieb, der Zielwert wird also anhand einer Abweichung zwischen Istwert und Sollwert der Regelgröße ermittelt.

Die Aktivierung des Momentenreglers kann nach dem Ende des Netzfehlers erfolgen. Zum gleichen Zeitpunkt kann auch die Initialisierung des Momentenreglers stattfinden. Das Ende des Netzfehlers kann beispielsweise so definiert sein, dass die Spannung wieder oberhalb der unteren Grenze des Normalbetriebs liegt. Vorzugsweise finden die Aktivierung des Momentenreglers und der Momentenrampe gleichzeitig mit dem Überschreiten dieser Grenze statt. Auch die Initialisierung kann mit dem Überschreiten der Grenze vorgenommen werden. Die Aktivierung des Momentenreglers kann auch zwischen dem Beginn und dem Ende des Netzfehlers erfolgen.

Es ist auch möglich, dass der Momentenregler bereits vor dem Netzfehler aktiviert wird, beispielsweise zu dem Zeitpunkt, zu dem die Windenergieanlage zum letzten Mal aus dem Stillstand in Betrieb gesetzt wurde. Während des Netzfehlers kann der Momentenregler in Betrieb bleiben, so dass der Zielwert weiterhin in Abhängigkeit von einer Abweichung zwischen einem Istwert und einem Sollwert der Regelgröße ermittelt wird. Angesichts der außergewöhnlichen Bedingungen während des Netzfehlers hat dies häufig zur Folge, dass es zu einer großen Abweichung zwischen dem Zielwert und dem Istwert der Regelgröße kommt. Dies kann aber akzeptiert werden, da nach dem Ende des Netzfehlers der Momenten-Sollwert ohnehin an der Momentenrampe entlang geführt wird. Große Abweichungen des Zielwerts nach oben haben also keinen direkten Einfluss auf den Momenten-Sollwert. Alle genannten Möglichkeiten, den Momentenregler zu aktivieren, sind von dem erfindungsgemäßen Betreiben des Momentenreglers umfasst.

Es hat sich gezeigt, dass das Regelergebnis noch weiter verbessert werden kann, wenn der erfindungsgemäße Momenten-Sollwert, der sich aus dem an der Momentenrampe entlang geführten Momentenregler ergibt, mit der Ausgangsgröße eines Zusatzreglers zusammengeführt wird, um den tatsächlichen Vorgabewert für das elektrische Moment zu ermitteln. Der Zusatzregler kann einen P-Anteil umfassen und ist vorzugsweise ein reiner P-Regler. P-Anteil bedeutet, dass die Ausgangsgröße proportional zur Eingangsgröße ist. Die Eingangsgröße ist vorzugsweise die Differenz zwischen der Soll-Drehzahl und der Ist-Drehzahl der Windenergieanlage. Beispielsweise können die Ausgangsgröße des Zusatzreglers und der Momenten-Sollwert mittels eines Summierers zusammengeführt werden. Der Zusatzregler kann gleichzeitig mit dem erfindungsgemäßen Momentenregler aktiviert werden. Mit dem Aktivieren kann die Ausgangsgröße des Zusatzreglers auf null initialisiert werden. Der Momentenregler und der Zusatzregler können in einer baulichen Einheit zusammengefasst sein.

Um das Regelergebnis noch näher an den idealen Verlauf anzunähern, kann der Zusatzregler mit einem Korrekturglied versehen sein, das eine Ausgangsgröße liefert, die von der Differenz zwischen dem elektrischen Moment vor Eintritt des Netzfehlers und dem Minimalwert des elektrischen Moments während des Netzfehlers abhängt. Das Korrekturglied wird vorzugsweise nach einer vorgegebenen Zeitspanne ab Ende des Netzfehlers deaktiviert. Die Zeitspanne kann beispielsweise zwischen 1 s und 4 s liegen.

Im Rahmen der Erfindung ist es möglich, nach dem Netzfehler einen Momentenregler und/oder Zusatzregler zu verwenden, die speziell für den Fehlerfall ausgelegt sind. Günstiger ist es jedoch, wenn der Momentenregler und/oder der Zusatzregler abgesehen von den erfindungsgemäßen Modifikationen dieselben sind, mit denen auch vor Eintritt des Netzfehlers auf das elektrische Moment der Windenergieanlage Einfluss genommen wurde. Insbesondere kann die Zeitkonstante des Momentenreglers unverändert bleiben.

Die erfindungsgemäße Momentenrampe soll insbesondere verhindern, dass ein ohnehin schon in Gang befindlicher Schwingungsvorgang des Triebstrangs der Windenergieanlage durch eine schlagartige Änderung des elektrischen Moments noch verstärkt wird. Hingegen kann eine schlagartige Änderung des elektrischen Moments durchaus gewünscht sein, wenn dem Schwingungsvorgang damit entgegengewirkt wird, die Schwingung also gedämpft wird. In diesem Zusammenhang ist besonders der erste Anstieg der Schwingung nach Eintritt des Netzfehlers von Interesse. Da während des Netzfehlers die elektrische Last wegfällt, ist bekannt, in welche Richtung der Triebstrang in dieser Phase schwingt. Eine schlagartige Erhöhung des elektrischen Moments in dieser Phase wird eine Dämpfung der Schwingung bewirken.

Ein Aspekt der Erfindung geht deswegen dahin, nach dem Eintritt des Netzfehlers eine vorgegebene Zeitspanne abzuwarten, bevor die schwingungsdämpfende Momentenregelung aktiviert wird. Die vorgegebene Zeitspanne ist vorzugsweise abhängig von der Dauer des Anstiegs der Triebstrangschwingung und ist insbesondere nicht länger als diese Dauer. Beispielsweise kann die Zeitspanne zwischen 100 ms und 200 ms, vorzugsweise zwischen 120 ms und 160 ms liegen. Dies entspricht dem Anstieg der Triebstrangschwingung bei einer größeren Windenergieanlage. Der Gedanke, eine für den Momentenregler vorgesehene Schranke nach dem Ende des Netzfehlers zunächst inaktiv zu lassen, hat eigenständigen erfinderischen Gehalt, auch ohne dass der erfindungsgemäße Momentenregler und die Momentenrampe aktiviert werden und ein Vergleich zwischen beiden durchgeführt wird.

Auch nach der Aktivierung des Momentenreglers kann mit dem erfindungsgemäßen Verfahren noch auf die Schwingungen im Triebstrang Einfluss genommen werden. Es kann dazu ein für den normalen Betrieb ohnehin vorhandenes Dämpfungsmodul verwendet werden, das ein der Triebstrangschwingung entgegengesetztes Steuersignal gibt. Das Steuersignal kann mit dem erfindungsgemäßen ermittelten Momenten-Sollwert zusammengeführt werden, um den tatsächlichen Vorgabewert für das elektrische Moment zu bestimmen. Zum Zusammenführen kann beispielsweise ein Summierer verwendet werden. Dabei kann die Verstärkung des Steuersignals gegenüber dem normalen Betrieb um mindestens den Faktor 2, vorzugsweise mindestens den Faktor 5, weiter vorzugsweise mindestens den Faktor 8 erhöht sein. Es kann ein Schrankenglied für das Steuersignal vorgesehen sein, um sicherzustellen, dass das Steuersignal innerhalb des zulässigen Bereichs bleibt. Beispielsweise kann die untere Schranke des Schrankenglieds 0 % und die obere Schranke 100 % des für die Windenergieanlage zulässigen elektrischen Moments betragen.

Zum Dämpfen der Schwingungen des Triebstrangs können insbesondere die ersten beiden Halbwellen nach dem Ende des Netzfehlers genutzt werden. Danach kann das Dämpfungsmodul wieder mit normalem Verstärkungsfaktor betrieben werden. Die Zeitspanne, innerhalb derer die erhöhte Verstärkung nach dem Ende des Netzfehlers aktiv ist, kann beispielsweise zwischen 0,2 s und 0,8 s liegen. Mit Ablauf der Zeitspanne kann die erhöhte Verstärkung inaktiviert werden. Der Gedanke, das Dämpfungsmodul nach dem Ende eines Netzfehlers mit erhöhtem Verstärkungsfaktor zu berücksichtigen, hat eigenständigen erfinderischen Gehalt, auch ohne dass der erfindungsgemäße Momentenregler und die Momentenrampe aktiviert werden und ein Vergleich zwischen beiden durchgeführt wird.

Wenn der Momenten-Sollwert bzw. der tatsächliche Vorgabewert für das elektrische Moment nach dem erfindungsgemäßen Verfahren ermittelt werden, können eine Reihe unterschiedlicher Eingangsgrößen einfließen, die auf nicht ganz einfache Weise zusammengeführt werden. Um die Regelung dennoch sicher innerhalb des zulässigen Bereichs zu halten, kann ein Begrenzer vorgesehen sein, der einen zulässigen Bereich für das elektrische Moment definiert. Ist der Momenten-Sollwert größer als der obere Grenzwert, wird der Momenten-Sollwert auf den oberen Grenzwert gesetzt. Ist der Momenten-Sollwert kleiner als der untere Grenzwert, wird der Momenten-Sollwert auf den unteren Grenzwert gesetzt. Der Begrenzer wird vorzugsweise als letzter Schritt auf den Momenten-Sollwert angewendet, so dass sich nach dem Begrenzer der tatsächliche Vorgabewert für das elektrische Moment ergibt.

Der untere Grenzwert kann beispielsweise dem Minimalwert des elektrischen Moments entsprechen, das während des Fehlers anlag. Der obere Grenzwert kann beispielsweise 110 % des elektrischen Moments entsprechen, das vor Eintritt des Netzfehlers anlag. Der Begrenzer ist vorzugsweise nur innerhalb einer vorgegebenen Zeitspanne nach dem Ende des Netzfehlers aktiv. Dabei kann die untere Grenze des Begrenzers früher aufgehoben werden als die obere Grenze. Die Zeitspanne, innerhalb derer die obere Grenze aufrechterhalten wird, sollte so gewählt werden, dass transiente Vorgänge abgeklungen sind. Beispielsweise kann die Zeitspanne für die obere Grenze zwischen 3 s und 8 s betragen. Bei der unteren Grenze ist zu berücksichtigen, dass dem Regler die Freiheit gegeben werden soll, das elektrische Moment nach unten zu regeln, wenn der Wind nachlässt. Die Zeitspanne für die untere Grenze ist deswegen vorzugsweise kleiner als 2 s, weiter vorzugsweise kleiner als 1 s.

Die Erfindung betrifft außerdem eine Windenergieanlage mit einem Netzfehlerdetektor, der dazu ausgelegt ist, bei Eintritt eines Netzfehlers ein Signal auszugeben. Es ist eine Steuerung vorgesehen, die dazu ausgelegt ist, nach dem Eintritt eines Netzfehlers eine Momentenrampe zu initialisieren. Die Windenergieanlage umfasst außerdem einen Momentenregler, der einen Zielwert für das elektrische Moment der Windenergieanlage ermittelt. Der Zielwert und die Momentenrampe werden einem Minimumglied zugeführt, das den kleineren der beiden Wert als Momenten-Sollwert ausgibt. Ein Umrichter ist dazu ausgelegt, das elektrische Moment der Windenergieanlage auf Basis des Momenten-Sollwerts einzustellen. Die Windenergieanlage kann mit weiteren Merkmalen fortgebildet werden, die mit Bezug auf das erfindungsgemäße Verfahren beschrieben sind. Insbesondere ist die Steuerung vorzugsweise so ausgelegt, dass sie den Momentenregler vor dem Beginn des Netzfehlers, zwischen dem Beginn und dem Ende des Netzfehlers oder nach dem Ende des Netzfehlers aktiviert.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: ein Blockdiagramm einer Ausführungsform eines Reglers der erfindungsgemäßen Windenergieanlage;
- Fig. 3:: eine Gegenüberstellung des Regelergebnisses des erfindungsgemäßen Verfahrens mit einem Verfahren aus dem Stand der Technik;
- Fig. 4:: ein Blockdiagramm einer anderen Ausführungsform eines erfindungsgemäßen Reglers;
- Fig. 5:: eine Gegenüberstellung des Regelergebnisses bei zwei unterschiedlichen Netzfehlern; und
- Fig. 6:: ein Blockdiagramm einer weiteren Ausführungsform eines erfindungsgemäßen Reglers.

Bei einer erfindungsgemäßen Windenergieanlage ist ein Rotor 14 in Richtung des Windes ausgerichtet und wird von dem Wind in Rotation versetzt. Mit einem Getriebe 15 wird die Rotation auf eine höhere Drehzahl übersetzt, wobei die Ausgangswelle des Getriebes 15 die Eingangswelle eines Generators 16 bildet. Über einen Umrichter 17 wird die elektrische Energie an einen Transformator 18 geleitet, der die elektrische Energie auf eine höhere Spannung transformiert und an ein nicht dargestelltes Stromnetz abgibt.

Die Windenergieanlage umfasst eine Steuerung 19, die im normalen Betrieb der Windenergieanlage das elektrische Moment der Windenergieanlage einstellt. Die Steuerung 19 umfasst zu diesem Zweck einen Regler 21, der über eine Steuerleitung 22 Vorgabewerte an den Umrichter 17 übermittelt, gemäß denen der Umrichter 17 das elektrische Moment einstellt, das auf den Triebstrang wirkt. In dem Regler 21 ist ein Speicher 23 enthalten, in dem für die verschiedenen Betriebszustände der Windenergieanlage jeweils eine Soll-Drehzahl hinterlegt ist. Zur Ermittlung der tatsächlichen Drehzahl des Triebstrangs der Windenergieanlage umfasst die Steuerung 19 einen Drehzahlsensor 20.

Als Eingangsgröße dient dem Regler 21 die Differenz aus der Ist-Drehzahl und der Soll-Drehzahl. Diese Differenz wird einem P-Glied und einem I-Glied des Reglers zugeführt, die aus der Differenz jeweils einen Ausgangswert ermitteln. Die Ausgangswerte werden nach geeigneter Gewichtung über einen Summierer zusammengeführt und dann den Umrichter 17 als Vorgabewert für das elektrische Moment zugeführt.

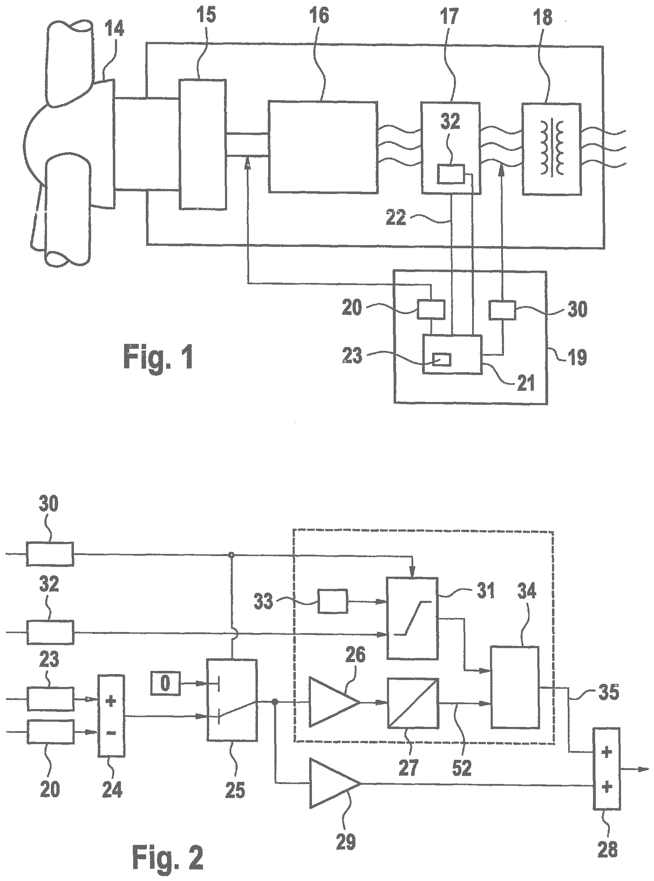

Gemäß der Erfindung wird der Regler 21 auch für die Regelung des Drehmoments nach einem Netzfehler verwendet. Dies erfordert einige Abwandlungen an dem Regler 21, die in dem Blockdiagramm der Fig. 2 dargestellt sind. Die Differenz aus der Ist-Drehzahl vom Drehzahlsensor 20 und der Soll-Drehzahl aus dem Speicher 23 wird mit einem Subtraktionsglied 24 ermittelt. Der Ausgangswert des Subtraktionsglieds 24 wird über einen Schalter 25 dem I-Glied und dem P-Glied des Reglers zugeführt. Das I-Glied umfasst einen Verstärker 26, aus dem sich der Verstärkungsfaktor Ki des I-Anteils ergibt, sowie den Integrierer 27, der die Differenz zwischen Ist und Soll über der Zeit aufsummiert.

Im normalen Betrieb der Windenergieanlage wird der Ausgangswert des Integrierers 27 direkt einem Summierer 28 zugeführt, in dem die Zusammenführung mit dem Ausgangswert des P-Glieds stattfindet. Der Ausgangswert des P-Glieds ergibt sich aus dem Verstärker 29, der den Verstärkungsfaktor Kp des P-Glieds festgelegt.

Für die Drehmomentregelung im Anschluss an einen Netzfehler ist der Regler 19 mit einem Netzfehlerdetektor 30 ausgestattet. Der Netzfehlerdetektor 30 misst die Spannung am Ausgang des Umrichters 17 und gibt ein Fehlersignal, wenn die Spannung die untere Grenze des Normalbetriebs unterschreitet. Die untere Grenze des Normalbetriebs kann beispielsweise auf 80 % der Nennspannung festgelegt sein.

Das Fehlersignal des Netzfehlerdetektors 30 wird an den Schalter 25 sowie an eine Momentenrampe 31 geleitet. Der Schalter 25 wird umgeschaltet, wenn das Fehlersignal am Eingang anliegt, was zur Folge hat, dass die Eingangsgröße des P-Glieds und des I-Glieds zwangsweise auf den Wert null gesetzt wird. Beim P-Glied hat dies zur Folge, dass auch der Ausgangswert null. Beim I-Glied wird der Ausgangswert eingefroren, bleibt also auf dem Wert zum Zeitpunkt des Fehlersignals konstant. In der Momentenrampe 31 passiert zunächst nichts, wenn das Fehlersignal am Eingang anliegt.

Kehrt die Spannung nach dem Ende des Netzfehlers wieder, was in vielen Fällen in Bruchteilen von Sekunden geschieht, steigt die Spannung wieder über die untere Grenze des Normalbetriebs hinaus an und der Netzfehlerdetektor 30 gibt kein Fehlersignal mehr. Mit dem Wegfall des Fehlersignals kehrt der Schalter 25 in den ursprünglichen Zustand zurück, so dass wieder die mit dem Subtraktionsglied 24 ermittelte Differenz zwischen Ist-Drehzahl und Soll-Drehzahl die Eingangsgröße für das I-Glied 26, 27 und das P-Glied 29 bildet. In dem I-Glied 26, 27 wird nun beginnend mit dem Wert vor Fehlereintritt, auf den das I-Glied 26, 27 eingefroren war, weiter aufsummiert. Bei dem P-Glied 29 ist die Ausgangsgröße ganz normal proportional zur Eingangsgröße.

Außerdem wird mit dem Wegfall des Fehlersignals die Momentenrampe 31 initialisiert. Die Momentenrampe 31 hat außer dem Eingang für das Fehlersignal zwei Eingänge, nämlich erstens einen Eingang, der mit einem Momentenspeicher 32 des Umrichters 17 verbunden ist, und zweitens einen Eingang, der an einen Zeitkonstantenspeicher 33 angeschlossen ist. In dem Momentenspeicher 32 ist der Minimalwert des elektrischen Moments gespeichert, der während des Netzfehlers noch angelegt werden konnte. Das elektrische Moment, das der Umrichter 17 anlegen kann, hängt direkt von der am Umrichter anliegenden Spannung ab, so dass der Minimalwert ein Indikator für die Schwere des Netzfehlers ist.

Mit diesen beiden Eingangswerten ist in der Momentenrampe 31 eine linear mit der Zeit ansteigende Funktion definiert, die zum Zeitpunkt der Initialisierung mit dem Minimalwert des elektrischen Moments startet und dann mit der durch die Zeitkonstante vorgegebenen Steigung auf das maximal für diese Windenergieanlage zulässige elektrische Moment ansteigt. Die Zeitkonstante kann beispielsweise so gewählt sein, dass der Anstieg sich über 0,3 s erstreckt. Der betreffende zeitlich veränderliche Wert liegt am Ausgang der Momentenrampe 31 an und wird als Vergleichswert zum Eingang eines Minimumglieds 34 geleitet.

An dem zweiten Eingang des Minimumglieds 34 liegt der Ausgangswert des I-Glieds 26, 27 an. Das Minimumglied 34 führt einen Vergleich dieses Ausgangswerts mit dem Vergleichswert der Momentenrampe 31 durch und gibt den kleineren der beiden Werte aus. Der Ausgangswert des Minimumglieds 34 wird als Momenten-Sollwert 35 an den Summierer 28 geleitet und dort mit dem Ausgangswert des P-Glieds 29 zusammengeführt. Der Ausgangswert des Summierers 28 wird als Vorgabewert für das elektrische Moment an den Umrichter 17 geleitet.

Das I-Glied 26, 27 bildet den Momentenregler im Sinne der Erfindung, wobei der Ausgangswert 52 des I-Glieds 26, 27 im Sinne der Erfindung den Zielwert für das elektrische Moment darstellt. Mit der Kombination aus dem I-Glied 26, 27, der Momentenrampe 31 und dem Minimumglied 34, die in Fig. 2 mit gestrichelter Linie umrandet sind, wird der erfindungsgemäße Momenten-Sollwert 35 ermittelt. Das P-Glied 29 bildet im Sinne der Erfindung den Zusatzregler, dessen Ausgangswert mit dem Momenten-Sollwert zusammengeführt wird, um den tatsächlichen Vorgabewert für das elektrische Moment zu ermitteln. Die Aktivierung des I-Glieds 26, 27 findet mit dem Wegfall des Fehlersignals statt, wenn dem I-Glied 26, 27 als Eingangsgröße wieder die Differenz zwischen Ist-Drehzahl und Soll-Drehzahl zugeführt wird. Die Initialisierung der Momentenrampe 31 erfolgt ebenfalls mit dem Wegfall des Fehlersignals, indem die Momentenrampe 31 auf den Minimalwert des elektrischen Moments während des Fehlers gesetzt wird und der zeitliche Ablauf der Rampe mit der Zeitkonstante aus dem Speicher 33 in Gang gesetzt wird.

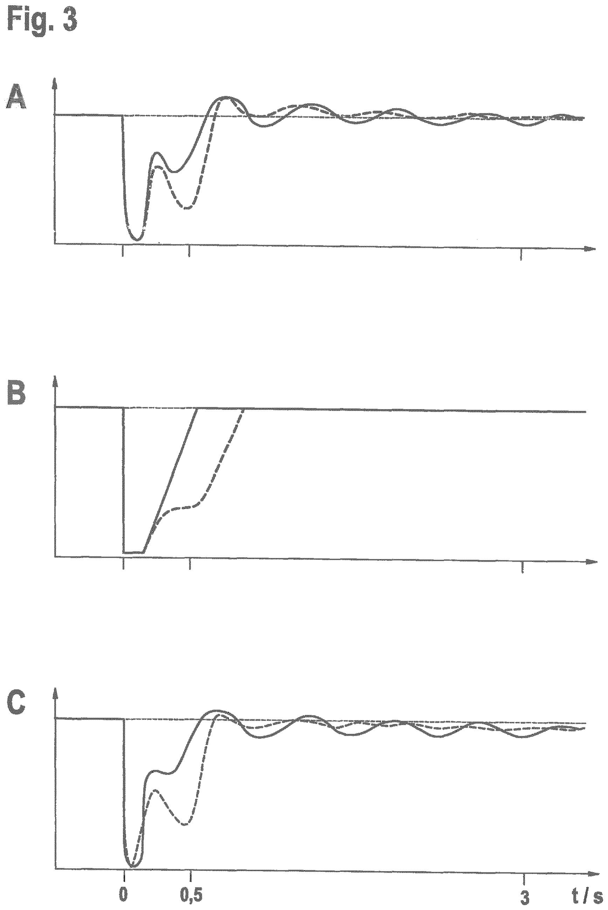

Der zeitliche Verlauf, der sich mit dem Regler gemäß Fig. 2 nach einem Netzfehler ergibt, ist in Fig. 3 beispielhaft dargestellt. Dabei zeigt Fig. 3A den zeitlichen Verlauf der vom Umrichter 17 abgegebenen elektrischen Leistung, Fig. 3B den zeitlichen Verlauf des Momenten-Sollwerts 35 am Ausgang des Minimumglieds 34 und Fig. 3C den zeitlichen Verlauf des Vorgabewerts für das elektrische Moment am Ausgang des Summierers 28. Es sind sich jeweils zwei Kurven gegenübergestellt, wobei die durchgezogene Linie das Verhalten des erfindungsgemäßen Reglers zeigt und die gestrichelte Linie zum Vergleich das Verhalten eines Reglers aus dem Stand der Technik zeigt, bei dem das I-Glied nach dem Netzfehler auf null initialisiert wird und die Zeitkonstante des I-Glieds erhöht wird, um Schwingungen zu vermeiden.

Es handelt sich um den Extremfall eines Fehlers, bei dem die Spannung zum Zeitpunkt t=0s von 100 % auf 0 % der Nennspannung zusammenbricht. Nach etwa 0,15 s ist die Spannung so weit zurückgekehrt, dass die untere Grenze des Normalbetriebs überschritten wird. Für den Regler aus Fig. 2 bedeutet dies, dass zum Zeitpunkt t=0s der Netzfehlerdetektor 30 ein Fehlersignal gibt, dass zum Zeitpunkt t=0,15 s wieder wegfällt.

Es zeigt sich in Fig. 3B, dass der Momenten-Sollwert 35 sich exakt entlang der Momentenrampe 31 bewegt. Durch die Überlagerung mit dem Ausgangswert des P-Glieds 26, 27 ergibt sich in Fig. 3C ein zwischenzeitliches Gegensteuern nach unten. Dies folgt daraus, dass das P-Glied 26, 27 zugleich dazu dient, Schwingungen des Triebstrangs entgegenzuwirken. Die Wiederkehr der Leistung in Fig. 3A folgt im Wesentlichen dem Vorgabewert des elektrischen Moments aus Fig. 3C. Es zeigt sich, dass die Wiederkehr der Leistung mit dem erfindungsgemäßen Regler deutlich schneller erfolgt als mit dem Regler aus dem Stand der Technik.

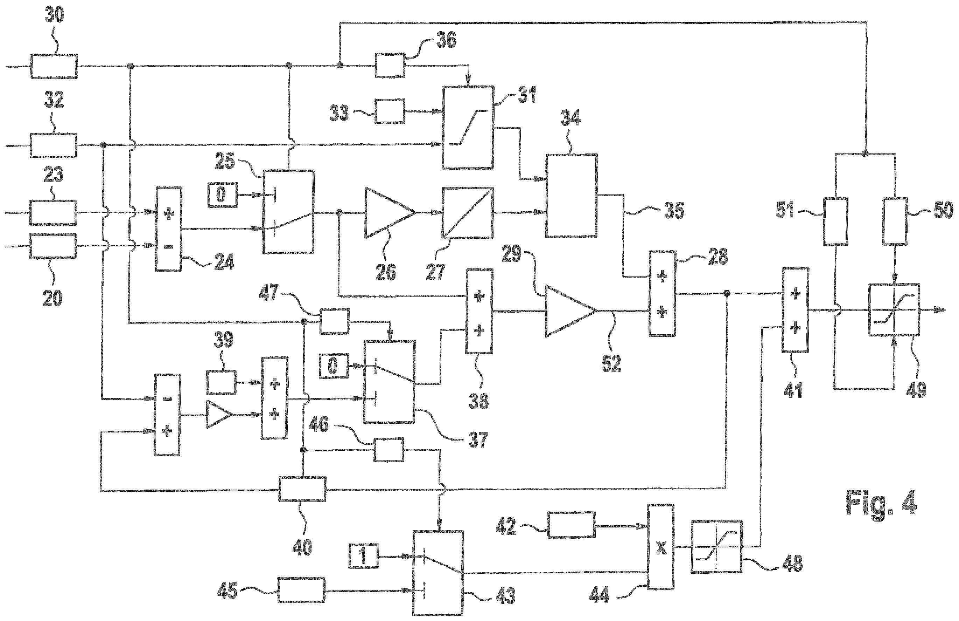

Eine erweiterte Variante des erfindungsgemäßen Reglers ist in Fig. 4 gezeigt. In dem dort gezeigten Regler sind alle Elemente des Reglers aus Fig. 2 identisch enthalten und es wurden lediglich einige Elemente hinzugefügt.

Zunächst ist die Signalleitung von dem Netzfehlerdetektor 30 zu der Momentenrampe 31 mit einem TON-Glied 36 versehen. Bei dem TON-Glied 36 handelt es sich um ein Verzögerungsglied, durch das ein am Eingang stattfindender Wechsel von 0 auf 1 erst mit einer vorgegebenen zeitlichen Verzögerung an den Ausgang weitergeleitet wird. Ein Wechsel von 1 auf 0 hingegen wird ohne Zeitverzögerung durchgeleitet.

Das TON-Glied 36 hat die Wirkung, dass die Initialisierung der Momentenrampe 31 nicht stattfindet, wenn der Netzfehler bereits vor Ablauf der durch das TON-Glied 36 vorgegebenen Verzögerung wieder beendet ist. Die Verzögerung des TON-Glieds 36 ist so bemessen, dass sie dem ersten Anstieg der Triebstrangschwingung entspricht. Für eine Windenergieanlage zwischen 3 MW und 4 MW kann die Verzögerung beispielsweise 140 ms betragen. Wenn die Momentenrampe 31 nicht in Gang gesetzt wird, wird der Ausgang des I-Glieds 26, 27 nicht durch die Momentenrampe begrenzt und am Ausgang des Minimumglieds 34 liegt der unbegrenzte Ausgangswert des I-Glieds 26, 27 an. Der Umrichter 17 kann also mit vollem elektrischen Moment der Triebstrangschwingung entgegensteuern.

Außerdem ist der Regler in Fig. 4 mit einem Korrekturglied versehen, das einen Schalter 37 umfasst, dessen Ausgang über einen Summierer 38 mit dem P-Glied 29 zusammengeführt wird. Im Normalbetrieb ist der Schalter 37 auf 0 geschaltet, so dass das Korrekturglied keinen Einfluss auf die Regelung nimmt. Sobald ein Fehlersignal von dem Netzfehlerdetektor 30 an dem Schalter 37 anliegt, schaltet dieser auf den anderen Eingang. Dort liegt die Summe aus einem fest eingestellten Korrekturwert aus dem Speicher 39 sowie einem Differenzwert zwischen dem Sollwert des elektrischen Moments vor Eintritt des Netzfehlers und dem Minimalwert des elektrischen Moment während des Netzfehlers an. Den Minimalwert erhält das Korrekturglied aus dem Momentenspeicher 32 des Umrichters 17. Der Sollwert vor Fehlereintritt stammt aus einem Hold-Glied 40, das ebenfalls durch das Fehlersignal des Netzfehlerdetektors 30 aktiviert wird. Mit dem Korrekturglied wird die Möglichkeit eröffnet, den Regler gezielt an die Eigenheiten einzelner Windenergieanlagen anzupassen.

Die Zeitdauer, für die das Korrekturglied nach dem Netzfehler aktiv bleibt, ergibt sich aus einem TOF-Glied 47. Bei einem TOF-Glied handelt es sich um ein Verzögerungsglied, durch das ein am Eingang stattfindender Wechsel von 1 auf 0 erst mit einer vorgegebenen zeitlichen Verzögerung an den Ausgang weitergeleitet wird. Ein Wechsel von 0 auf 1 hingegen wird ohne Zeitverzögerung durchgeleitet. Im vorliegenden Beispiel kann die Verzögerung des TOF-Glieds 47 beispielsweise 3s betragen, so dass die Nachschwingungen nach dem Netzfehler bereits weitgehend abgeklungen sind.

Der Regler gemäß Fig. 4 umfasst außerdem ein Dämpfermodul, dessen Ausgangswert über einen Summierer 41 mit dem Momenten-Sollwert zusammengeführt wird. Das Dämpfermodul umfasst einen im Ausgangspunkt klassischen Dämpfer 42, wie er bei Windenergieanlage in typischer Weise verwendet wird, um über das elektrische Moment den Schwingungen des Triebstrangs 14, 15, 16 entgegenzuwirken. Über einen Schalter 43 und einen Multiplizierer 44 wird die Gewichtung eingestellt, mit der der Ausgangswert des Dämpfers 42 dem Momenten-Sollwert überlagert wird. Im Normalbetrieb der Windenergieanlage liegt an dem Schalter 41 der Wert 1 an, so dass der Dämpfer 42 mit normaler Gewichtung berücksichtigt wird. Liegt das Fehlersignal vom Netzfehlerdetektor 30 an dem Schalter 43 an, wird der Schalter 43 auf den anderen Eingang umgeschaltet. Aus einem Speicher 45 wird ein Faktor ausgelesen, um den die Gewichtung des Dämpfers 42 erhöht wird. Der Faktor kann beispielsweise den Wert 10 haben, so dass der Einfluss des Dämpfers 42 um ein Vielfaches erhöht wird. Der Ausgangswert des Multiplizierers 44 wird durch einen Schrankenglied 48 geleitet, um sicherzustellen dass die Grenzen zwischen 0 % und 100 % des zulässigen elektrischen Moments eingehalten werden. Durch ein TOF-Glied 46 wird die Zeitdauer festgelegt, für die die Gewichtung des Dämpfers 42 erhöht bleibt. Die Zeitdauer kann beispielsweise einer vollen Welle einer Triebstrangschwingung entsprechen. Bei größeren Windenergieanlagen mit einer Leistung von einigen Megawatt könnte die Zeitdauer beispielsweise 0,5 s betragen.

Schließlich umfasst der Regler in Fig. 4 einen Begrenzer 49, mit dem sichergestellt wird, dass der Vorgabewert für das elektrische Moment innerhalb vorgegebener Grenzen gehalten wird. Die untere Grenze entspricht in dem vorliegenden Beispiel dem Minimalwert des elektrischen Moments während des Netzfehlers. Die obere Grenze ist auf 110 % des elektrischen Moments vor Eintritt des Netzfehlers festgelegt. Die Zeitdauer, während derer der Begrenzer 49 nach dem Netzfehler aktiv bleibt, ist durch zwei TOF-Glieder 50, 51 für den oberen Grenzwert und den unteren Grenzwert getrennt definiert. Der untere Grenzwert wird im vorliegenden Beispiel nach 1 s inaktiv, so dass dem Regler die Möglichkeit gegeben wird, das elektrische Moment zu reduzieren, falls zwischenzeitlich der Wind nachgelassen hat. Die obere Grenze bleibt 5 s aktiv, so dass die transienten Vorgänge nach dem Netzfehler abgeklungen sind.

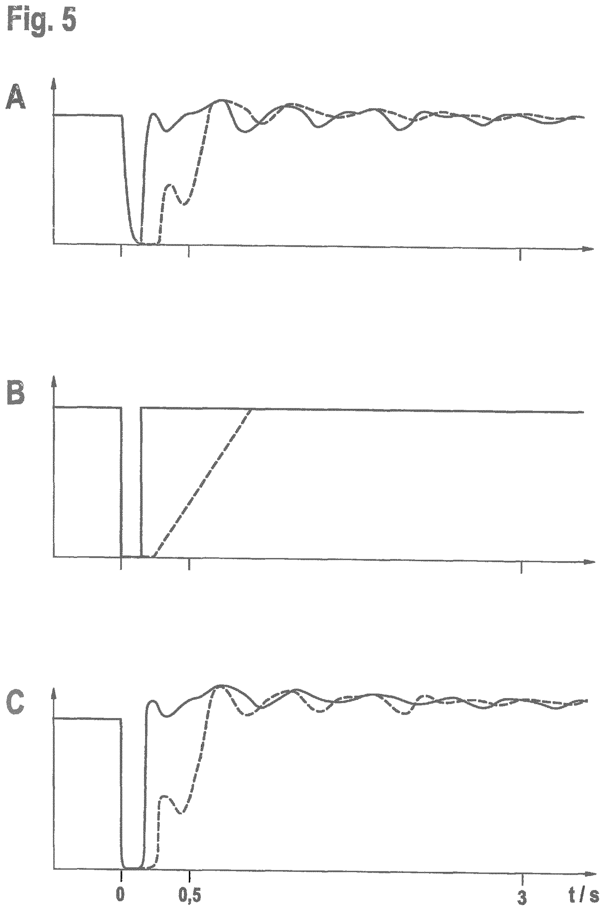

Fig. 5 zeigt das Zeitverhalten des Reglers aus Fig. 4 bei zwei verschiedenen Arten von Netzfehlern. Dabei zeigt Fig. 5A den zeitlichen Verlauf der vom Umrichter 17 abgegebenen elektrischen Leistung, Fig. 5B den zeitlichen Verlauf des Momenten-Sollwerts 35 am Ausgang des Minimumglieds 34 und Fig. 5C den zeitlichen Verlauf des Vorgabewerts für das elektrische Moment am Ausgang des Begrenzers 49. Die durchgezogene Linie bezieht sich auf einen Netzfehler, der nach 150 ms beendet ist. Bei der gestrichelten Linie dauerte der Netzfehler 200 ms.

Der Netzfehler von 150 ms Dauer liegt unterhalb der Verzögerung des TON-Glieds 36, so dass die Momentenrampe 31 in diesem Fall nicht aktiviert wird. Der Sollwert für das elektrische Moment steigt folglich schlagartig wieder an, was zur Folge hat, dass auch die elektrische Leistung sofort wiederkehrt. Die schlagartige Änderung ist erwünscht, weil sie der sich gerade aufbauenden Schwingung des Triebstrangs entgegengesetzt ist. Entsprechend zeigen die Figuren 5A und 5C dass die Nachschwingungen nicht stärker ausgeprägt sind als bei der langsameren Wiederkehr der Leistung im Vergleichsbeispiel.

Bei der Fehlerdauer von 200 ms wird die Momentenrampe 31 aktiv und der durch die gestrichelte Linie wiedergegebene zeitliche Verlauf ähnelt dem aus Fig. 3.

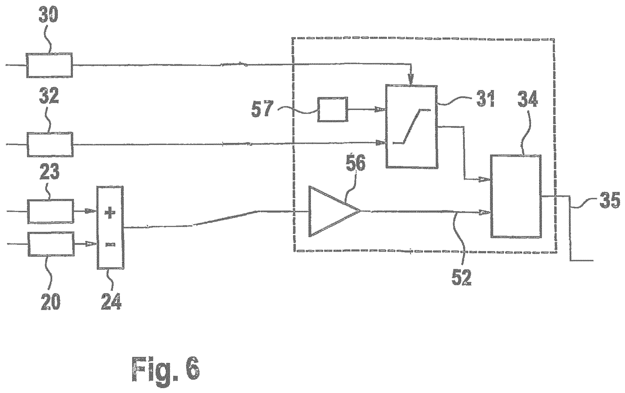

Eine weitere Ausführungsform eines erfindungsgemäßen Reglers ist in Fig. 6 gezeigt, die weitgehend der Ausführungsform gemäß Fig. 2 entspricht. Die Differenz aus der Ist-Drehzahl vom Drehzahlsensor 20 und der Soll-Drehzahl aus dem Speicher 23 wird mit einem Subtraktionsglied 24 ermittelt. Der Ausgangswert des Subtraktionsglieds 24 wird einem Regler 56 zugeführt, der ein P-Glied und ein I-Glied umfasst. Im normalen Betrieb der Windenergieanlage wird der Ausgangswert des Reglers 56 direkt als Momenten-Sollwert verwendet.

Für die Drehmomentregelung während und nach einem Netzfehler ist der Regler 19 mit einem Netzfehlerdetektor 30 ausgestattet. Der Netzfehlerdetektor 30 misst die Spannung am Ausgang des Umrichters 17 und gibt ein Fehlersignal, wenn die Spannung die untere Grenze des Normalbetriebs unterschreitet.

Das Fehlersignal des Netzfehlerdetektors 30 wird an die Momentenrampe 31 geleitet. Kehrt die Spannung nach dem Ende des Netzfehlers wieder, was in vielen Fällen in Bruchteilen von Sekunden geschieht, steigt die Spannung wieder über die untere Grenze des Normalbetriebs hinaus an und der Netzfehlerdetektor 30 gibt kein Fehlersignal mehr. Mit dem Wegfall des Fehlersignals wird die Momentenrampe 31 initialisiert. Die Momentenrampe 31 erhält aus einem Speicher 32 eine Information über die Dauer des Fehlers und den Minimalwert des elektrischen Moments während des Fehlers. Anhand dieser Informationen wählt ein Zeitkonstantenmodul 57 geeignete Zeitkonstanten für eine erste Momentenrampe und eine zweite Momentenrampe aus, wobei die erste Momentenrampe dazu bestimmt ist, den P-Anteils des Reglers 56 zu begrenzen, und wobei die zweite Momentenrampe dazu bestimmt ist, den I-Anteil des Reglers 56 zu begrenzen. Die zeitlich ansteigenden Ausgangswerte der beiden Momentenrampen werden als Vergleichswert zum Eingang des Minimumglieds 34 geleitet.

An dem zweiten Eingang des Minimumglieds 34 liegen die Ausgangswerte P-Anteils und des I-Anteils des Reglers 56 an. Das Minimumglied 34 führt einen Vergleich dieser Ausgangswerte mit dem Vergleichswert der jeweils zugehörigen Momentenrampe durch und gibt den kleineren der beiden Werte aus. Der Ausgangswert des Minimumglieds 34 wird als Momenten-Sollwert 35 an den Umrichter 17 geleitet.

Der Regler 56 bildet den Momentenregler im Sinne der Erfindung, wobei der Ausgangswert 52 des Reglers 56 im Sinne der Erfindung den Zielwert für das elektrische Moment darstellt. Mit der Kombination aus dem Regler 56, der Momentenrampe 31 und dem Minimumglied 34, die in Fig. 6 mit gestrichelter Linie umrandet sind, wird der erfindungsgemäße Momenten-Sollwert 35 ermittelt.

## Patentansprüche

1. Verfahren zum Regeln des elektrischen Moments einer Windenergieanlage bei einem Netzfehler mit folgenden Schritten:
a. Entdecken eines Spannungsabfalls, der außerhalb der Grenzen des Normalbetriebs liegt;
**dadurch gekennzeichnet, dass** das Verfahren die weiteren Schritte aufweist:
b. Initialisieren einer Momentenrampe (31);
c. Vergleichen eines Zielwerts (52) eines Momentenreglers (26, 27) mit der Momentenrampe (31);
d. Auswählen des kleineren Werts aus Schritt c. als Momenten-Sollwert (35); und
e. Einstellen des elektrischen Moments der Windenergieanlage auf der Basis des Momenten-Sollwerts (35).

2. Verfahren nach Anspruch 1, **dadurch gekennzeichnet, dass** die Momentenrampe (31) von einem Anfangswert zu einem Endwert ansteigt und dass der Anfangswert in Abhängigkeit von dem Minimalwert (32) des elektrischen Moments während des Netzfehlers und/oder in Abhängigkeit von der Dauer des Netzfehlers eingestellt wird.

3. Verfahren nach Anspruch 1 oder 2, **dadurch gekennzeichnet, dass** der Momentenregler (26, 27, 56) einen P-Anteil und/oder einen I-Anteil umfasst.

4. Verfahren nach Anspruch 3, **dadurch gekennzeichnet, dass** der Zielwert des P-Anteils mit einer ersten Momentenrampe und der Zielwert des I-Anteils mit einer zweiten Momentenrampe verglichen wird.

5. Verfahren nach einem der Ansprüche 1 bis 4, **dadurch gekennzeichnet, dass** der Momenten-Sollwert (35) mit der Ausgangsgröße eines Zusatzreglers (29) zusammengeführt wird und dass der Zusatzregler (29) einen P-Anteil umfasst, dessen Eingangsgröße die Differenz zwischen Soll-Drehzahl (23) und Ist-Drehzahl (20) der Windenergieanlage ist.

6. Verfahren nach Anspruch 5, **dadurch gekennzeichnet, dass** auf den Zusatzregler (29) ein Korrekturwert angewendet wird, der von der Differenz zwischen dem elektrischen Moment (40) vor Eintritt des Netzfehlers und dem Minimalwert (32) des elektrischen Moments während des Netzfehlers abhängt.

7. Verfahren nach einem der Ansprüche 1 bis 6, **dadurch gekennzeichnet, dass** derselbe Momentenregler (26, 27, 56) und/oder Zusatzregler (29) verwendet werden wie vor Eintritt des Netzfehlers.

8. Verfahren nach einem der Ansprüche 1 bis 7, **dadurch gekennzeichnet, dass** der Momentenregler (26, 27, 56) vor Beginn des Netzfehlers oder zwischen dem Beginn und dem Ende des Netzfehlers aktiviert wird.

9. Verfahren nach einem der Ansprüche 1 bis 7, **dadurch gekennzeichnet, dass** der Momentenregler (26, 27, 56) nach dem Ende des Netzfehlers aktiviert wird.

10. Verfahren nach Anspruch 9, **dadurch gekennzeichnet, dass** der Momentenregler (26, 27, 56) nur dann aktiviert wird, wenn der Netzfehler beendet ist und seit Eintritt des Netzfehlers eine vorgegebene Zeitspanne verstrichen ist.

11. Verfahren nach Anspruch 10, **dadurch gekennzeichnet, dass** die Zeitspanne der Anstiegsdauer einer Schwingung des Triebstrangs (14, 15, 16) der Windenergieanlage entspricht.

12. Verfahren nach einem der Ansprüche 1 bis 11, **dadurch gekennzeichnet, dass** ein Dämpfermodul (42, 43, 45) vorgesehen ist, das ein der Triebstrangschwingung entgegengesetztes Steuersignal gibt und dass das Steuersignal mit einem im Vergleich zum normalen Betrieb erhöhten Verstärkungsfaktor versehen wird und mit dem Momenten-Sollwert (35) zusammengeführt wird

13. Verfahren nach einem der Ansprüche 1 bis 12, **dadurch gekennzeichnet, dass** ein Begrenzer (49) auf den Momenten-Sollwert (35) angewendet wird, wobei der untere Grenzwert in Abhängigkeit von dem Minimalwert (32) des elektrischen Moment während des Netzfehlers und der obere Grenzwert in Abhängigkeit von dem elektrischen Moment vor Eintritt des Netzfehlers eingestellt wird.

14. Verfahren nach Anspruch 13, **dadurch gekennzeichnet, dass** eine erste Zeitspanne (51) nach dem Ende des Netzfehlers vorgesehen ist, nach der der untere Grenzwert deaktiviert wird, und dass eine zweite Zeitspanne (50) nach dem Ende des Netzfehlers vorgesehen ist, nach der der obere Grenzwert deaktiviert wird, wobei die erste Zeitspanne (51) kürzer ist als die zweite Zeitspanne (50).

15. Windenergieanlage mit einem Netzfehlerdetektor (30), einem Momentenregler (26, 27, 56), der einen Zielwert (52) für das elektrische Moment der Windenergieanlage ermittelt, und mit einem Umrichter (17), **dadurch gekennzeichnet, dass** die Windenergieanlage eine Steuerung (19) und ein Minimumglied (34) umfasst, wobei die Steuerung dazu ausgelegt ist, nach dem Eintritt eines Netzfehlers eine Momentenrampe (31) zu initialisieren, und wobei das Minimumglied (34) einen Vergleich zwischen dem Zielwert (52) und der Momentenrampe (31) durchführt und den kleineren Wert als Momenten-Sollwert (35) ausgibt, und wobei der Umrichter (17) dazu ausgelegt ist, das elektrische Moment der Windenergieanlage auf Basis des Momenten-Sollwerts (35) einzustellen.

## Claims

1. Method for controlling the electrical moment of a wind turbine by closed-loop control in the event of a grid fault, comprising the following steps:
a. discovering a fall in voltage that is outside the limits of normal operation;
**characterized in that** the method has the further steps of:
b. initializing a moment ramp (31);
c. comparing a target value (52) of a moment closed-loop controller (26, 27) with the moment ramp (31) ;
d. selecting the lesser value from step c. as a moment setpoint value (35); and
e. setting the electrical moment of the wind turbine on the basis of the moment setpoint value (35).

2. Method according to Claim 1, **characterized in that** the moment ramp (31) rises from an initial value to an end value, and the initial value is set in dependence on the minimum value (32) of the electrical moment during the grid fault and/or in dependence on the duration of the grid fault.

3. Method according to Claim 1 or 2, **characterized in that** the moment closed-loop controller (26, 27, 56) comprises a P component and/or an I component.

4. Method according to Claim 3, **characterized in that** the target value of the P component is compared with a first moment ramp, and the target value of the I component is compared with a second moment ramp.

5. Method according to any one of Claims 1 to 4, **characterized in that** the moment setpoint value (35) is combined with the output variable of an additional closed-loop controller (29), and the additional closed-loop controller (29) comprises a P component whose input variable is the difference between a setpoint rotational speed (23) and an actual rotational speed (20) of the wind turbine.

6. Method according to Claim 5, **characterized in that** a correction value, which depends on the difference between the electrical moment (40) before the occurrence of the grid fault and the minimum value (32) of the electrical moment during the grid fault, is applied to the additional closed-loop controller (29).

7. Method according to any one of Claims 1 to 6, **characterized in that** the same moment closed-loop controller (26, 27, 56) and/or additional closed-loop controller (29) are/is used as before the occurrence of the grid fault.

8. Method according to any one of Claims 1 to 7, **characterized in that** the moment closed-loop controller (26, 27, 56) is activated before the start of the grid fault or between the start and the end of the grid fault.

9. Method according to any one of Claims 1 to 7, **characterized in that** the moment closed-loop controller (26, 27, 56) is activated after the end of the grid fault.

10. Method according to Claim 9, **characterized in that** the moment closed-loop controller (26, 27, 56) is activated only when the grid fault has ended and a predefined period of time has passed since the occurrence of the grid fault.

11. Method according to Claim 10, **characterized in that** the time period of the rise time corresponds to a vibration of the drive train (14, 15, 16) of the wind turbine.

12. Method according to any one of Claims 1 to 11, **characterized in that** a damper module (42, 43, 45) is provided, which emits a control signal in opposition to the drive train vibration, and the control signal is provided with an increased gain factor in comparison with normal operation, and is combined with the moment setpoint value (35).

13. Method according to any one of Claims 1 to 12, **characterized in that** a limiter (49) is applied to the moment setpoint value (35), wherein the lower limiting value is set in dependence on the minimum value (32) of the electrical moment during the grid fault, and the upper limiting value is set in dependence on the electrical moment before the occurrence of the grid fault.

14. Method according to Claim 13, **characterized in that** a first period of time (51) after the end of the grid fault is provided, after which the lower limiting value is deactivated, and a second period of time (50) after the end of the grid fault is provided, after which the upper limiting value is deactivated, wherein the first period of time (51) is shorter than the second period of time (50).

15. Wind turbine, having a grid fault detector (30), a moment closed-loop controller (26, 27, 56), which determines a target value (52) for the electrical moment of the wind turbine, and having a converter (17), **characterized in that** the wind turbine comprises an open-loop control system (19) and a minimum element (34), wherein the open-loop control system is designed to initialize a moment ramp (31) after the occurrence of a grid fault, and wherein the minimum element (34) effects a comparison between the target value (52) and the moment ramp (31) and outputs the lesser value as a moment setpoint value (35), and wherein the converter (17) is designed to set the electrical moment of the wind turbine on the basis of the moment setpoint value (35).

## Revendications

1. Procédé destiné à réguler le moment électrique d'une éolienne en cas de dysfonctionnement du réseau, comprenant les étapes suivantes :
a. détecter une chute de tension telle que les limites du domaine de fonctionnement normal sont franchies ;
**caractérisé en ce que** le procédé comprend les étapes supplémentaires suivantes :
b. initialiser une rampe de moment (31) ;
c. comparer une valeur cible (52) d'un régulateur de moment (26, 27) avec la rampe de moment (31) ;
d. choisir la plus petite valeur de l'étape c. comme valeur de consigne (35) pour le moment ; et
e. régler le moment électrique de l'éolienne en se basant sur la valeur de consigne (35) pour le moment.

2. Procédé selon la revendication 1, **caractérisé en ce que** la rampe de moment (31) croît d'une valeur initiale à une valeur finale et **en ce que** la valeur initiale est réglée en fonction de la valeur minimale (32) du moment électrique pendant le dysfonctionnement du réseau et/ou en fonction de la durée du dysfonctionnement du réseau.

3. Procédé selon la revendication 1 ou 2, **caractérisé en ce que** le régulateur de moment (26, 27, 56) comprend une composante P et/ou une composante I.

4. Procédé selon la revendication 3, **caractérisé en ce que** la valeur cible de la composante P est comparée à une première rampe de moment et **en ce que** la valeur cible de la composante I est comparée à une deuxième rampe de moment.

5. Procédé selon l'une quelconque des revendications 1 à 4, **caractérisé en ce que** la valeur de consigne (35) pour le moment est combinée à la grandeur de sortie d'un régulateur supplémentaire (29) et **en ce que** le régulateur supplémentaire (29) comprend une composante P dont la grandeur d'entrée est la différence entre la vitesse de rotation de consigne (23) et la vitesse de rotation réelle (20) de l'éolienne.

6. Procédé selon la revendication 5, **caractérisé en ce qu'**une valeur de correction est appliquée au régulateur auxiliaire (29), laquelle dépend de la différence entre le moment électrique (40) avant l'apparition du dysfonctionnement du réseau et la valeur minimale (32) du moment électrique pendant le dysfonctionnement du réseau.

7. Procédé selon l'une quelconque des revendications 1 à 6, **caractérisé en ce que** le régulateur de moment (26, 27, 56) et/ou le régulateur auxiliaire (29) sont identiques à ceux utilisés avant la survenue du dysfonctionnement du réseau.

8. Procédé selon l'une quelconque des revendications 1 à 7, **caractérisé en ce que** le régulateur de moment (26, 27, 56) est activé avant le début du dysfonctionnement du réseau ou entre le début et la fin du dysfonctionnement du réseau.

9. Procédé selon l'une quelconque des revendications 1 à 7, **caractérisé en ce que** le régulateur de moment (26, 27, 56) est activé après la fin du dysfonctionnement du réseau.

10. Procédé selon la revendication 9, **caractérisé en ce que** le régulateur de moment (26, 27, 56) n'est activé que lorsque le dysfonctionnement du réseau a pris fin et qu'une période de temps prédéterminée s'est écoulée depuis l'apparition du dysfonctionnement du réseau.

11. Procédé selon la revendication 10, **caractérisé en ce que** la période de temps de la durée de croissance correspond à une oscillation de la chaîne cinématique (14, 15, 16) de l'éolienne.

12. Procédé selon l'une quelconque des revendications 1 à 11, **caractérisé en ce qu'**il est prévu un module amortisseur (42, 43, 45) qui donne un signal de commande opposé à l'oscillation de la chaîne cinématique et **en ce que** le signal de commande est pourvu d'un facteur d'amplification augmenté par rapport au fonctionnement normal et est combiné avec la valeur de consigne (35) pour le moment.

13. Procédé selon l'une quelconque des revendications 1 à 12, **caractérisé en ce qu'**un limiteur (49) est appliqué à la valeur de consigne (35) pour le moment, dans lequel la valeur limite inférieure est réglée en fonction de la valeur minimale (32) du moment électrique pendant le dysfonctionnement du réseau et la valeur limite supérieure est réglée en fonction du moment électrique précédant le dysfonctionnement du réseau.

14. Procédé selon la revendication 13, **caractérisé en ce qu'**il est prévu une première période de temps (51) après la fin du dysfonctionnement du réseau, après laquelle la valeur limite inférieure est désactivée, et **en ce qu'**il est prévu une deuxième période de temps (50) après la fin du dysfonctionnement du réseau, après laquelle la valeur limite supérieure est désactivée, dans lequel la première période de temps (51) est plus courte que la deuxième période de temps (50).

15. Éolienne comportant un détecteur (30) de dysfonctionnement du réseau, un régulateur de moment (26, 27, 56) qui détermine une valeur cible (52) pour le moment électrique de l'éolienne, et comportant un convertisseur (17), **caractérisée en ce que** l'éolienne comprend une unité de commande (19) et un élément de détermination de minimum (34), dans laquelle l'unité de commande est conçue pour initialiser une rampe de moment (31) après la survenue d'un dysfonctionnement du réseau, et dans laquelle l'élément de détermination de minimum (34) effectue une comparaison entre la valeur cible (52) et la rampe de moment (31) et délivre la valeur la plus faible en tant que valeur de consigne (35) pour le moment, et dans laquelle le convertisseur (17) est conçu pour régler le moment électrique de l'éolienne sur la base de la valeur de consigne (35) pour le moment.
